(19) **Europäisches Patentamt / European Patent Office / Office européen des brevets**

(11) **EP 3 680 954 B1**

(12) **EUROPEAN PATENT SPECIFICATION**

(45) Date of publication and mention
of the grant of the patent:
**27.03.2024 Bulletin 2024/13**

(21) Application number: **18872877.8**

(22) Date of filing: **05.10.2018**

(51) International Patent Classification (IPC):
**H01M 10/12** (2006.01)    **H01M 50/466** (2021.01)
**H01M 10/06** (2006.01)

(52) Cooperative Patent Classification (CPC):
**H01M 50/466;** H01M 10/06; Y02E 60/10;
Y02P 70/50

(86) International application number:
**PCT/JP2018/037300**

(87) International publication number:
**WO 2019/087681 (09.05.2019 Gazette 2019/19)**

(54) **LEAD STORAGE BATTERY**

BLEIAKKUMULATOR

BATTERIE DE STOCKAGE AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2017 JP 2017211360**

(43) Date of publication of application:
**15.07.2020 Bulletin 2020/29**

(73) Proprietor: **GS Yuasa International Ltd.
Kyoto-shi, Kyoto 601-8520 (JP)**

(72) Inventors:
• **INAGAKI, Satoshi
Kyoto-shi
Kyoto 601-8520 (JP)**

• **WADA, Hidetoshi
Kyoto-shi
Kyoto 601-8520 (JP)**
• **KYO, Masaaki
Kyoto-shi
Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
**JP-A- S58 165 245      JP-A- 2001 210 302
JP-A- 2011 134 525      JP-A- 2017 033 660
JP-U- H0 543 462        US-A1- 2012 021 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a lead-acid battery.

BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution. Generally, a sulfuric acid aqueous solution is used as the electrolyte solution.

JP-A-2015-22796 discloses an example where a negative electrode plate is stored in a bag-shaped polyethylene separator and ribs are provided on the negative electrode plate side. In this example, the ribs are formed inside the bag-shaped separator.

When the separator is formed in a bag shape, the separator is generally folded into a U-shape, and both side edges are joined. Examples of a method for joining both side edges include a method using gear sealing, heat sealing, and ultrasonic sealing, and a method using an adhesive or an adhesive tape (e.g., see JP-A-2009-245901).

Moreover, the CD-ROM of the specification and drawings annexed to the request of Japanese Utility Model Application No. 109387/1991 (Laid-open No. 43462/1993; THE FURUKAWA BATTERY CO, LTD.; 11 June 1993) describes a pocket type separator for an electrode of a storage battery, said separator having a bottom, closed left and right side edges and an open top side. The inner surfaces of the front and read sides of the pocket type separator facing each other include a plurality of parallel, vertical, widthwise spaced ribs in middle regions constituting most of the facing surfaces. They further include a plurality of intersecting vertically spaced ribs on the widthwise left and right side end portions of the facing surfaces and intersecting front and rear corner edge portions of opposite side edges of an electrode plate contained in the pocket type separator.

SUMMARY OF THE INVENTION

PROBLEMS TO BE SOLVED BY THE INVENTION

In the manufacturing of a bag-shaped separator having ribs formed inside as exemplified in JP-A-2015-22796, in the case of joining the separator, a separator having ribs formed on a joint surface can be used.

However, when the separator having the ribs formed on the joint surface is superimposed and joined, sufficient joining strength may not be obtained depending on the arrangement of the ribs.

MEANS FOR SOLVING THE PROBLEMS

One aspect of the present invention is a lead-acid battery in which an electrode group is stored in a cell chamber together with an electrolyte solution, the electrode group having a plurality of positive electrode plates and a plurality of negative electrode plates stacked via a separator. The separator has a shape of a bag with an opening. The separator includes a first surface and a second surface constituting an inner surface of the bag and facing each other, a plurality of first ribs provided on the first surface, and a plurality of second ribs provided on the second surface, a third surface that is a back surface of the first surface and a fourth surface that is a back surface of the second surface, the third surface and the fourth surface constituting an outer surface of the bag, a plurality of third ribs provided on the third surface, and a fourth rib provided on the fourth surface, and a joint part between the first surface and the second surface. At least one of the first ribs provided on the first surface intersects at the joint part with at least one of the second ribs provided on the second surface.

ADVANTAGES OF THE INVENTION

According to the present disclosure, it is possible to increase the strength of the joint part of the bag-shaped separator used for the lead-acid battery.

BRIEF DESCRIPTION OF THE DRAWINGS

Fig. 1 is a diagram schematically showing the appearance of a separator used in a lead-acid battery according to one aspect of the present invention.

Fig. 2 is a schematic view showing a separator sheet before a separator for a lead-acid battery is processed into a bag shape.

Figs. 3(a) and 3(b) are schematic diagrams each showing a state of inner ribs when the separator sheet is superimposed.

Fig. 4 is a schematic view showing another embodiment of Fig. 2, showing a separator sheet before a separator for a lead-acid battery is processed into a bag shape.

Fig. 5 is a schematic view showing another embodiment of Fig. 2, showing a separator sheet before a separator for a lead-acid battery is processed into a bag shape.

Fig. 6 is a schematic view showing another embodiment of Fig. 2, showing a separator sheet before a separator for a lead-acid battery is processed into a bag shape.

Fig. 7 is an exploded perspective view showing an external appearance and an internal structure of a lead-acid battery, which is partially cut off, according to one aspect of the present invention.

## MODES FOR CARRYING OUT THE INVENTION

A lead-acid battery according to one aspect of the present invention is a lead-acid battery in which an electrode group is stored in a cell chamber together with an electrolyte solution. The electrode group has a plurality of positive electrode plates and a plurality of negative electrode plates stacked via a separator. The separator has a bag shape having an opening. The separator includes a first surface and a second surface facing each other which constitute the inner surface of the bag, a plurality of first ribs provided on the first surface, and a plurality of second ribs provided on the second surface. Further, the separator includes a third surface being a back surface of the first surface and a fourth surface being a back surface of the second surface which constitute the outer surface of the bag, a plurality of third ribs provided on the third surface, and a fourth rib provided on the fourth surface. Moreover, the separator includes a joint part between the first surface and the second surface, and at least one of the first ribs provided on the first surface intersects at the joint part with at least one of the second ribs provided on the second surface.

In the separator, the first surface on which the first ribs are formed and the second surface on which the second ribs are formed are made to face each other, and the first surface and the second surface of the separator made to face each other are joined, so that the separator is formed into a bag shape. A joint part for binding the first surface and the second surface in a bag shape is formed on the end side of the separator.

Specifically, for example, one separator sheet is folded in half and superimposed in a U-shape, the folded portion is taken as the lower end, and joint parts are provided on the left end side and the right end side, to form a bag-shaped separator having an opening end at the upper end. Alternatively, the separator may be formed into the bag shape by taking the right end (or left end) of the separator sheet as the folded portion and forming the joint parts on the left end side (or right end side) and the lower end side. Alternatively, the separator may be formed into a bag shape by superimposing two separator sheets and forming joint parts on the left end side, the right end side, and the lower end side. In this case, the bag-shaped separator has a substantially quadrangular outer shape. The outer shape of the separator is not limited to a quadrangle, but may be any shape (e.g., polygon or arc). The sides forming the polygon need not be strictly straight lines, but may have curved portions or bent portions. For example, in a case where a bag-shaped separator having an approximately triangular outer shape is produced by folding, the joint part may be provided on one end side corresponding to one side of the triangle.

Here, in the bag-shaped separator, a direction in which the opening for insertion of the positive electrode plate or the negative electrode plate is defined as the upper side (vertical direction) of the separator, and the opposite side thereto is defined as the lower side. When the upper and lower sides of the separator are defined in this way, a direction located on the left side is defined as the left side of the separator, and a direction located on the right side is defined as the right side of the separator.

The rib refers to a protruding portion protruding from one surface of the separator, and is provided to prevent close contact between the separator and the plate and to prevent breakage due to oxidation degradation of the separator and/or permeation short circuit. The ribs are provided on the surface of the separator in a predetermined pattern.

The first surface and the second surface of the separator constitute the inner surfaces of the bag facing each other. Preferably, the separator has a joint region and a plate region. The joint region is a region including a joint part that binds the first surface and the second surface in a bag shape, and is set to be a region wider than the joint part in consideration of a positioning margin related to the joining. Preferably, the joint region is provided on the end side of the separator, and a peripheral region at a distance to the end within a predetermined distance can be set as the joint region. In contrast, the plate region is a region separated from the joint region, and is a region facing the positive electrode plate or the negative electrode plate when the positive electrode plate or the negative electrode plate is stored into the separator.

When the joint region is provided on the end side of the separator, the joint part may be provided so as to include the end. Alternatively, in the joint region, the joint part may be formed by extending in parallel with the contour of the end of the separator, or may be formed by extending in an arbitrary contour shape different from the contour of the end of the separator.

A plurality of first ribs are provided on the first surface of the separator, and a plurality of second ribs are provided on the second surface of the separator. Since the first rib is formed in the plate region on the first surface, it is possible to prevent one of the positive electrode plate and the negative electrode plate from coming into close contact with the first surface. Similarly, since the second rib is formed in the plate region on the second surface, it is possible to prevent one of the electrode plates from coming into close contact with the second surface. The first rib and the second rib provided in the plate region are formed on the inner surface of the bag-shaped separator, and when the positive electrode plate or the negative electrode plate is stored, breakage and/or a permeation short circuit, which may occur due to the oxidation degradation of the separator, are prevented. Hereinafter, the first rib and the second rib are collectively referred to as "inner ribs".

Generally, the first ribs and the second ribs are arranged in a linear pattern such that the plurality of ribs have a regular interval in a predetermined region in parallel with adjacent ribs.

The first rib and the second rib (inner ribs) are also formed on the joint region on the first surface and the second surface. When the inner ribs are formed in the joint region, the first rib on the first surface and the second rib on the second surface can be superimposed at the time of joining. However, depending on the method of the superimposition, sufficient joining strength may not be obtained.

For example, at the joint part between the first surface and the second surface, the second rib can be stuck into a valley between the adjacent first ribs (or the first rib can be stuck into a valley between the adjacent second ribs). In this case, the joining strength is lower than when the first rib and the second rib superimpose. In particular, in the case of using a crimping method such as gear sealing, a decreasing tendency of the joining strength increases. However, in consideration of the accuracy in the positioning of the joint part by a joining device, it is difficult to completely prevent a situation where the second rib is stuck into the valley between the first ribs (or the first rib is stuck into the valley between the second ribs), which contributes to variation in joining strength. As a result, the performance as a lead-acid battery also varies.

This is a common problem in the case of providing the inner ribs irrespective of welding or adhesion. However, the problem is remarkable in the method of performing the joining by compressing the joint part to a predetermined thickness, such as a joining method based on crimping like a gear sealing method, or a heat welding method. Of the first rib and the second rib, one rib is stuck into a valley between the other ribs, whereby the thickness of the joint part before crimping becomes smaller than expected. As a result, a compression ratio at the time of compression to a predetermined thickness decreases, easily causing a decrease in joining strength.

Therefore, in one aspect of the present invention, the arrangement pattern of the inner ribs is devised, so that at least one of the first ribs provided on the first surface intersects at the joint part with at least one of the second ribs provided on the second surface. By arranging the inner ribs such that the first rib and the second rib intersect, it is possible to prevent another rib from being stuck into a valley between adjacent ribs.

Here, that the first rib and the second rib "intersect" refers to a state in which the first surface and the second surface face each other and the first rib and the second rib are in contact at least at a point. The first rib and the second rib may be in line or surface contact. Note that the number of locations where the ribs are in contact at least at a point is not limited to one. The linear pattern of the ribs may be straight line or curved line. A dotted line in which a part of a straight line or a curve line is missing may be used. As the pattern of the ribs, a striped pattern made up of a plurality of ribs formed in a parallel straight line is preferred because the ribs can be manufactured easily. Regarding an angle at which the first rib and the second rib intersect, the pattern of the first ribs and the pattern of the second ribs may intersect at an angle of preferably 0.2° or more, and more preferably 0.3° or more. When the intersection angle is 0.2° or more, sufficient joining strength can be obtained.

A case is conceivable where, depending on the method of forming the joint part, it is difficult to determine whether or not the first rib and the second rib intersect at the joint part based on the state of the joint part. Also, in this case, it is possible to estimate whether or not the first rib and the second rib intersect at the joint part from the arrangement of the first rib and the second rib in the region around the joint part. For example, when the plurality of first ribs and the plurality of second ribs are each formed in a linear shape extending in a certain direction at a regular interval in the joint region, it can be estimated that the first ribs and the second rib are similarly formed in the joint part in a linear shape extending in the same direction as the rib extending direction in the joint region at the same rib interval as the rib interval in the joint region. That is, it is possible to interpolate or extrapolate the rib pattern at the joint part from the rib pattern in the peripheral region of the joint part to estimate the intersection of the first rib and the second rib.

Preferably, in a peripheral region (joint region) on the first surface of the joint part, when the first ribs are provided in a linear pattern extending in a first direction, in a peripheral region (joint region) on the second surface of the joint part, the second ribs may be provided in a linear pattern extending in a second direction different from the first direction. Since the second rib extends in the direction different from that of the first rib in the direction inclined with respect to the first rib, the intersection of the first rib and the second rib easily occurs at the joint part. Thereby, the variation in joining strength is decreased, and the joining strength can be maintained.

At this time, in the plate region, the first ribs preferably extend in the identical direction to the first ribs in the joint region, from the viewpoint of easy rib processing. Similarly, in the plate region, the second ribs preferably extend in the identical direction to the second ribs in the joint region, from the viewpoint of easy rib processing.

The first ribs preferably include a plurality of first joint ribs provided at a regular interval in a joint region on the first surface and a plurality of first plate ribs provided at a regular interval in a plate region on the first surface. At this time, the interval at which the first joint ribs are provided may be made smaller than the interval at which the first plate ribs are provided. Thereby, more first ribs can be intersected with the second ribs in the joint region.

Similarly, the second ribs preferably include a plurality of second joint ribs provided at a regular interval in a joint region on the second surface and a plurality of second plate ribs provided at a regular interval in a plate region on the second surface. At this time, the interval at which the second joint ribs are provided may be made smaller than the interval at which the second plate ribs are provided. Thereby, thereby, the first ribs can be intersected with more second ribs in the joint region.

By increasing the number of intersections between the first rib and the second rib in the joint part, the joining strength can be maintained high.

The separator preferably includes a plurality of third ribs constituting the outer surface of the bag and provided on a third surface that is the back surface of the first surface. The separator preferably includes a plurality of fourth ribs constituting the outer surface of the bag and provided on a fourth surface that is the back surface of the second surface. The third rib and the fourth rib prevent the other of the positive electrode plate and the negative electrode plate, which is not stored into the separator bag, from adhering to the separator. The third rib and the fourth rib provided in the plate region are formed on the outer surface of the bag-shaped separator, to prevent breakage and/or a permeation short circuit that may occur due to the oxidation degradation of the separator caused by contact with the other electrode plate. Hereinafter, the third rib and the fourth rib will be collectively referred to as "outer ribs".

The performance of the battery can be enhanced by the bag-shaped separator provided with the inner ribs and the outer ribs. However, in this case, it is necessary to hold the total thickness of the separator small in order to maintain the charge-discharge characteristics high, thereby necessitating a decrease in the thickness of the base portion of the separator. As a result, the joining strength at the end of the separator tends to decrease, and the problem of the variation in joining strength becomes more serious.

The third rib may be provided in a region on the third surface corresponding to the joint region on the first surface (i.e., a region on the back surface side of the joint region on the first surface). The fourth rib may be provided in a region on the fourth surface corresponding to the joint region on the second surface (i.e., a region on the back surface side of the joint region on the second surface). In this case, the third rib or the fourth rib (outer rib) is compressed together at the time of forming the joint by crimping or the like. This makes it possible to increase the compression ratio and increase the joining strength, but also makes the variation in joining strength due to variation in the positioning of the joining ends more remarkable. However, by arranging the inner ribs such that the first rib and the second rib intersect, it is possible to prevent another rib from being stuck into the valley between the adjacent ribs, and to maintain the joining strength high.

In this way, at the joint part of the bag-shaped separator, the joining strength can be maintained high by the first rib and the second rib intersecting with each other. The effects described above are not limited to the crimping method using gear sealing, but the effects can be obtained also in heat welding and the like. In these cases, in the separator, a joint has been formed at the joint part by crimping-joining or welding-joining.

The bag-shaped separator described above is effective when the bag-shaped separator stores the negative electrode plate, and can enhance the resistance to permeation short circuit.

Hereinafter, a lead-acid battery according to an embodiment of the present invention, in particular, an aspect of a separator, will be described in detail with reference to the drawings. However, the present invention is not limited to the following embodiment. Further, in the following drawings, a state of inner ribs in a joint region of the separator will be emphasized and described, and the actual composition ratio of each part of the separator may not match the corresponding composition ratio of each part in the drawing.

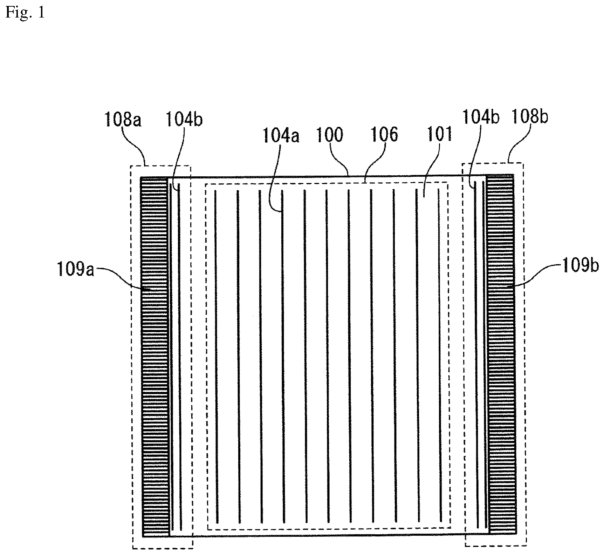

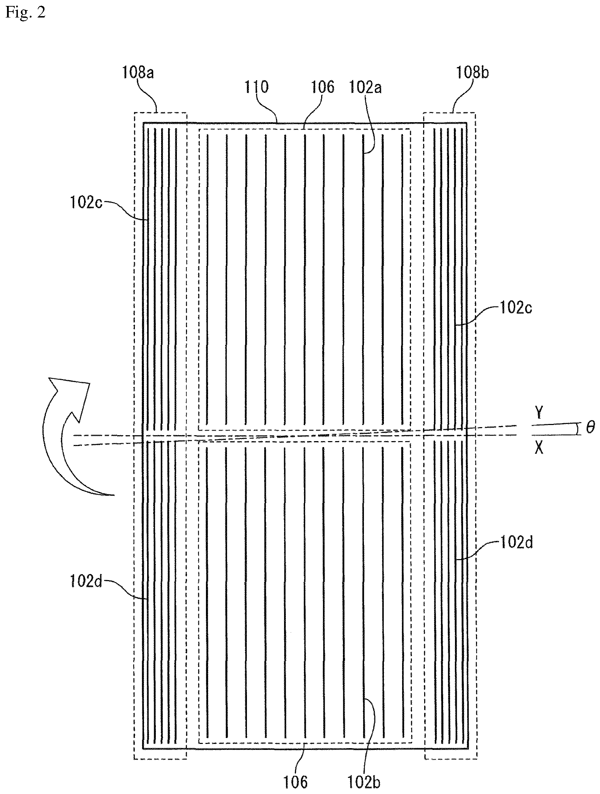

Fig. 1 is a schematic diagram showing a bag-shaped separator to be used in the lead-acid battery according to the embodiment of the present invention, as viewed from the outside of the bag. Fig. 2 schematically shows a separator sheet before the separator of Fig. 1 is processed into a bag shape. A separator 100 includes a bag-shaped base 101 made of a microporous film, inner ribs 102a to 102d protruding from the inner surface (first surface or second surface) of the base 101, and outer ribs 104a, 104b protruding from the outer surface (third surface) of the base 101. However, the inner ribs 102a to 102d are inside the bag-shaped separator, and are thus not shown in Fig. 1. When the negative electrode plate is stored in separator 100, the inner ribs 102a to 102d are located on the negative electrode plate side, and the outer ribs 104a, 104b are located on the positive electrode plate side. When the positive electrode plate is stored to separator 100, the outer ribs 104a, 104b are located on the negative electrode plate side, and the inner ribs 102a to 102d are located on the positive electrode plate side. Both the configuration in which the negative electrode plate is stored to the separator 100 and the configuration in which the positive electrode plate is stored in the separator 100 are possible.

Separator 100 may be formed from a polymer material. At least the base is a porous sheet and can also be called a porous film. The separator 100 may contain a filler (e.g., a particulate filler such as silica, and/or a fibrous filler) dispersed in a matrix formed from a polymer material. The separator 100 is preferably made of a polymer material having acid resistance. As such a polymer material, a polyolefin such as polyethylene or polypropylene is preferred.

The average thickness of the base 101 is, for example, 0.15 mm or more and 0.3 mm or less, and preferably 0.18 mm or more and 0.27 mm or less. When the average thickness of the base is in such a range, the height of the inner rib, and the height of the outer ribs as necessary, are easily ensured while high charge-discharge characteristics are maintained high. The average thickness of the base is obtained by measuring the thickness of the base at five freely selected locations in a cross-sectional photograph of the separator and averaging the measured thickness.

The separator 100 has a plate region 106, a joint region 108a provided on the left end side of the separator, and a joint region 108b provided on the right end side of the separator. Joints (joint parts) 109a, 109b between the first surface and the second surface are formed in the joint regions 108a, 108b, respectively.

On the first surface and the second surface of the plate region 106, an inner rib 102a (first plate rib) and an inner rib 102b (second plate rib) are provided (cf. Figs. 2 to 5), and on the third surface of the plate region 106, an outer rib 104a is provided. When a lead-acid battery is configured, the separator 100 faces the positive electrode plate or the negative electrode plate in the plate region 106. At this time, the inner ribs 102a, 102b and the outer rib 104a prevent the base 101 from coming into direct contact with the positive electrode plate or the negative electrode plate. On the other hand, on the first surface and the second surface of the joint regions 108a, 108b, an inner rib 102c (first joint rib) and an inner rib 102d (second joint rib) are provided (cf. Figs. 2 to 5). An outer rib 104b is provided on the third surface of each of the joint regions 108a, 108b.

The separator 100 shown in Fig. 1 is formed by folding, in half, one separator sheet with the inner ribs 102a to 102d and the outer ribs 104a, 104b previously formed thereon, and joining the left end side and the right end side by a method such as gear sealing. Fig. 2 schematically shows the separator sheet 110 before being folded in half and forming the joints at the left and right end sides. Note that Fig. 2 is a schematic view of the separator sheet as viewed from the first surface side and the second surface side on which the inner ribs 102a to 102d are formed, and the outer ribs 104a, 104b are not shown since being present on the back surface side.

As shown in Fig. 2, the inner rib 102a is provided in the plate region 106 on the first surface, and the inner rib 102b is provided in the plate region 106 on the second surface. The inner rib 102c is provided on the first surface of each of the joint regions 108a, 108b, and an inner rib 102d is provided on the second surface of each of the joint regions 108a, 108b. The inner ribs 102a to 102d are each formed in a linear striped pattern at predetermined intervals in a direction parallel to the long side of the separator sheet. In Fig. 2, the rib interval between the inner ribs 102c, 102d provided in the joint regions 108a, 108b has been made smaller than the rib interval between the inner ribs 102a, 102b provided in the plate region 106.

In the present embodiment, in a case where the separator sheet shown in Fig. 2 is folded to form the bag-shaped separator 100 shown in Fig. 1, the separator sheet is not folded in a direction X parallel to the short side of the separator sheet as the axis, but, as shown by the chain line 2, the separator sheet is folded in a direction Y slightly shifted from the direction parallel to the short side as the axis, and the left and right end sides of the joint regions 108a, 108b are joined. As a result, when the first surface and the second surface are made to face each other to form a bag-shaped separator, the inner ribs 102a to 102d extend in a direction slightly inclined from the vertical direction. Also, the inner ribs 102a, 102c on the first surface and the inner ribs 102b, 102d on the second surface extend as inclined in directions opposite to each other from the vertical direction, so that when the first surface and the second surface are made to face each other, the inner rib 102c and the inner rib 102d can be intersected in each of the joint regions 108a, 108b. At this time, the inner ribs 102a and the inner ribs 102b intersect in the plate region 106 as well. Then, the joint is formed in a region including at least one intersection between the inner rib 102c and the inner rib 102d in the joint regions 108a, 108b.

At the time of joining the left and right end sides of the joint regions 108a, 108b, the intersection of the inner rib 102c and the inner rib 102d at the joint part facilitates to prevent one of the inner ribs 102c from being stuck into a valley between the inner ribs 102d provided at a predetermined interval on the second surface, and prevent one of the inner ribs 102d from being stuck into a valley between the inner ribs 102c provided at a predetermined interval on the first surface. As a result, the variation in joining strength is decreased, and the joining strength can be maintained.

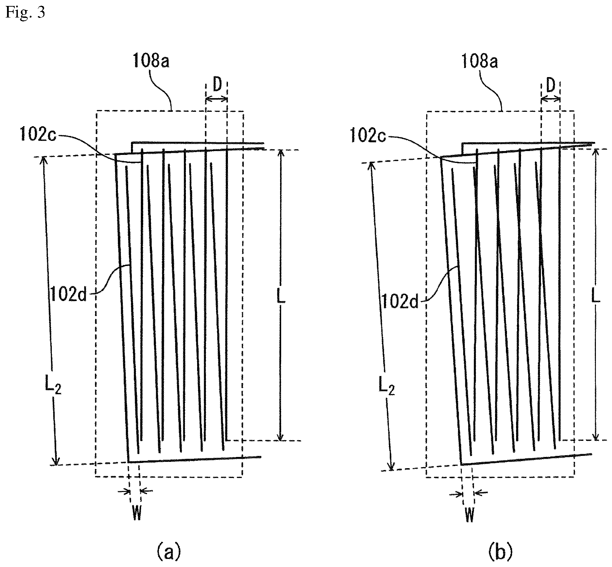

Figs. 3(a) and 3(b) each show a state of the inner ribs of the separator sheet in the joint region 108a when the first surface and the second surface are made to face each other. In Figs. 3(a) and 3(b), the outer ribs have been omitted to avoid the figure being complicated.

When the separator sheet shown in Fig. 2 is folded in half, in a case where the axis for folding has been shifted from the direction X parallel to the short side of the separator sheet and the shift angle is small, the inner rib 102c and the inner rib 102d may not superimpose depending on the positional relationship between the inner ribs 102c, 102d, as shown in Fig. 3(a). In this case, the inner rib 102d is stuck in a valley between the inner ribs 102c, and the inner rib 102c is stuck in a valley between the inner ribs 102d.

On the other hand, when the shift angle is large, as shown in Fig. 3(b), the inner ribs 102c, 102d intersect regardless of the positional relationship between the inner rib 102c and the inner rib 102d. In this case, the joining strength can be maintained high.

In a case where the separator sheet is folded in half, even when the shift angle of the axis for folding is the same, the relative position of the inner rib 102d with respect to the inner rib 102c varies in the horizontal direction depending on the position at which the separator sheet is folded (the position in the longitudinal direction of the separator sheet). Even when the shift angle is small, it is possible to obtain a separator sheet on which the inner rib 102c and the inner rib 102d intersect. However, depending on the folding position, both the case where the inner rib 102c and the inner rib 102d intersect and the case where the inner rib 102c and the inner rib 102d do not intersect (Fig. 3(a)) may occur, so that the joining strength may vary. However, as compared to the case where the separator sheet is folded along X as the axis, the variation in joining strength has been decreased.

It is assumed that the interval at which the inner ribs 102d are provided is D, and the length of the inner ribs 102d is L. Assuming that the shift angle of the axis Y, along which the separator sheet is folded, from the direction X parallel to the short side is $\theta$, the inner rib 102c and the inner rib 102d are inclined by $\theta$ in directions opposite to each other, and hence the intersection angle is $2\theta$. In this case, when

$$\tan 2\theta \geq D/L$$

is satisfied, the inner rib 102c and the inner rib 102d can be reliably intersected at one or more locations, so that the joining strength can be increased and the variation in joining strength can be maintained low. In this case, when the width of the joint part from the end of the separator sheet is set so as to include the inner rib 102d located second from the end side, the joint part includes at least one intersection of the inner rib 102c and the inner rib 102d. Assuming that the distance to the end of the inner rib 102d located closest to the end side is W, the joint part may be set to a region including the end and having a width of D + W or more. Further, for preventing the generation of a non-joint portion, the width of the joint part is preferably set so as to exceed the shift of the end of the separator ($L_2 \tan 2\theta$, where the length of the end of the separator on the joint part side is $L_2$ when the separator is folded in two).

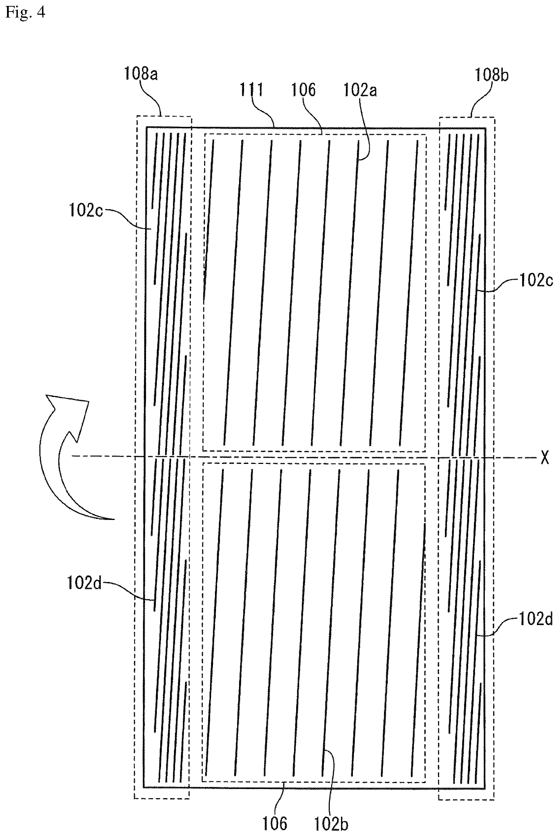

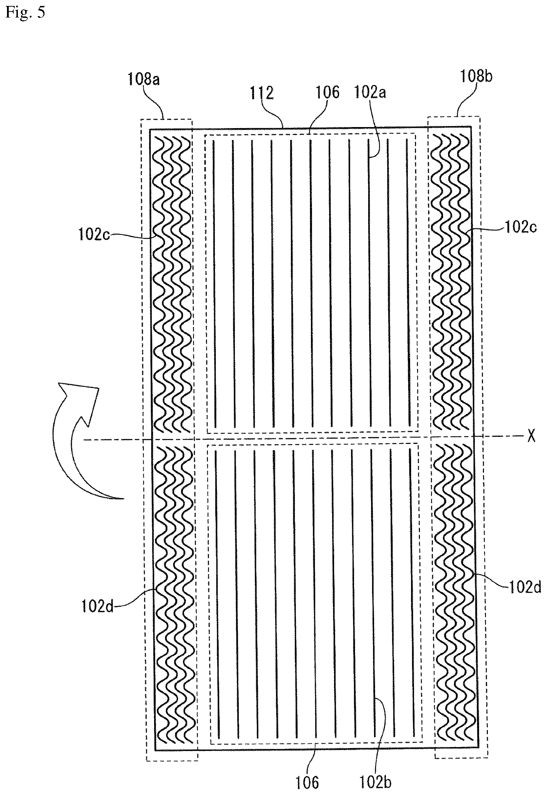

Fig. 4 and Fig. 5 are schematic views showing an embodiment of the separator sheet different from Fig. 2. In the separator sheet 111 shown in Fig. 4, the inner ribs 102a to 102d are not extended in the direction parallel to the long side of the separator sheet (vertical direction) as shown in Fig. 2, but are extended in a direction slightly inclined from the direction parallel to the long side. In this case, when the separator sheet is folded in the direction parallel to the short side of the separator sheet as the axis, the inner ribs 102a, 102c on the first surface and the inner ribs 102b, 102d on the second surface extend as inclined in the directions opposite to each other from the vertical direction. Therefore, when the first surface and the second surface are made to face each other and the joint is formed on each of the left and right end sides, the inner rib 102c and the inner rib 102d can be intersected at the joint parts in the joint regions 108a, 108b. At this time, in the plate region 106, the inner rib 102a and the inner rib 102b intersect.

In Fig. 4, the axis along which the separator sheet 111 is folded in two may be inclined from the direction parallel to the short side of the separator sheet, like the axis Y shown in Fig. 2. The angle at which the inner rib 102c and the inner rib 102d intersect can be increased, and the inner rib 102c and the inner rib 102d can be easily intersected at the joint part.

In a separator sheet 112 shown in Fig. 5, the inner ribs 102c, 102d in the joint region do not have a striped pattern of straight lines, but have a striped pattern of curved line extending substantially in the vertical direction while waving. In this case, when the separator sheet is folded in the direction parallel to the short side of the separator sheet as the axis and the first surface and the second surface are made to face each other, in the joint regions 108a, 108b, one inner rib 102c can be intersected with one or more inner ribs 102d at a plurality of locations. Further, one inner rib 102d can be intersected with one or more inner ribs 102c at a plurality of locations. Since the number of intersections increases, the variation in joining strength are further decreased, and the high joining strength can be maintained.

The average height of the inner ribs in the joint region is preferably 0.05 mm or more from the viewpoint of the thrust strength at the end, and is preferably 0.5 mm or less from the viewpoint of preventing joining failure due to insufficient joining energy or the like. The inner ribs in the plate region preferably has an average height of 0.3 mm or more when facing the positive electrode plate in order to prevent the oxidation degradation, and preferably has an average height of 0.05 mm or more when facing the negative electrode plate in order to prevent the permeation short circuit. Meanwhile, the inner ribs in the plate region preferably has an average height of 0.5 mm or less from the viewpoint of maintaining high charge-discharge characteristics. The height of the inner rib refers to a distance from one main surface (first surface or second surface) of the base (separator sheet) at a predetermined position of the inner rib to the top of the inner rib. The average height of the inner ribs is obtained by averaging the heights of the inner ribs measured at ten arbitrarily selected positions of the inner ribs on one main surface of the base.

Figs. 2 to 5 have illustrated the striped patterns as the patterns of the inner ribs 102a to 102d. However, the pattern of the inner rib is not particularly limited. The inner ribs may be formed randomly, or may be formed in stripes, a curved shape, a grid shape, or the like. Further, as illustrated in Fig. 5, the pattern of the inner rib may be different between the plate region and the joint region. From the viewpoint of making the electrolyte solution more easily diffused, a plurality of inner ribs are preferably formed so as to be arranged in stripes at least on the electrode plate on the first surface or the second surface. The orientation of the striped inner ribs is not particularly limited, but, for example, the plurality of inner ribs may be formed along the height direction or the width direction. From the viewpoint of preventing an increase in internal resistance due to stagnation of gas generated during charge, the plurality of inner ribs are preferably formed in stripes along the height direction. On the other hand, from the viewpoint of preventing sedimentation of high-concentration sulfuric acid generated during charge and preventing stratification, it is preferable to form the plurality of inner ribs in stripes along the width direction. The height direction refers to a direction in which the opening of the bag-shaped separator is present, and the width direction refers to a direction perpendicular to the height direction.

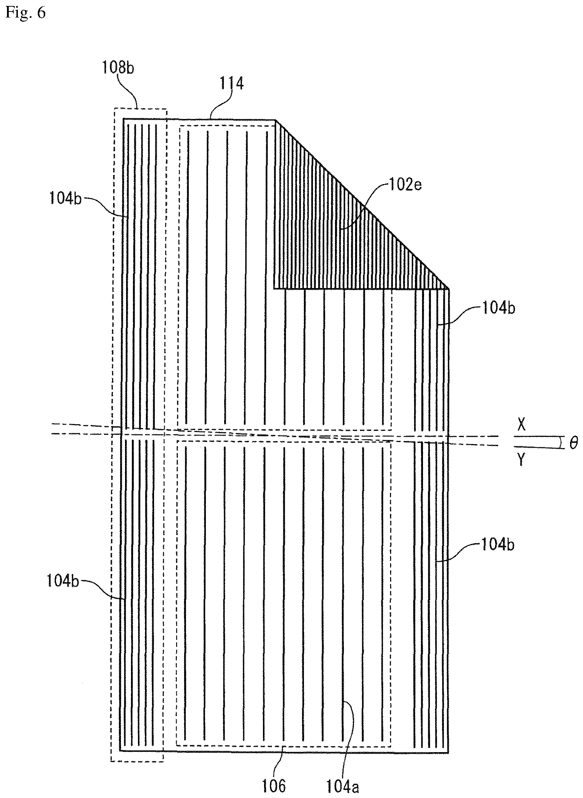

Fig. 6 is a schematic diagram showing an embodiment of the separator sheet different from those of Figs. 2, 4, and 5. Fig. 6 is a view of the separator sheet 114 as viewed from the third surface (fourth surface) side, and the state of the first surface (second surface) side is also shown by folding an upper-right right-angled triangular region toward the paper surface side. The separator sheet is folded (mountain-folded) in two so that the paper surface side of the separator sheet 114 becomes the outer surface and the back surface side of the paper surface becomes the inner surface, thereby forming a bag-shaped separator. At this time, one of the inner surfaces, facing each other, of the two-folded separator sheet 114 constitutes the first surface, and the other constitutes the second surface. Of the outer surfaces of the two-folded separator sheet 114, the outer surface located at a position separated from the first surface constitutes the third surface, and the outer surface located at a position separated from the second surface constitutes a fourth surface.

In the separator sheet 114 shown in Fig. 6, a plurality of outer ribs 104a, 104b are formed so as to be arranged in stripes along the height direction. On the other hand, a plurality of inner ribs 102e are formed so as to be arranged in stripes along the width direction. The interval between the inner ribs 102e is the same for both the joint region and the plate region. On the other hand, the interval between the outer ribs 104b in the joint region is smaller than the outer rib 104a in the plate region. The separator sheet 114 is suitably used when the negative electrode plate is stored in the bag-shaped separator. Also, in the separator sheet 114, the inner ribs 102e facing each other can be intersected by folding the separator sheet in the direction Y slightly shifted from the direction parallel to the short side of the separator sheet as the axis to form a joint part.

It is conceivable that by using the separator sheets shown in Fig. 2 and Figs. 4 to 6, the plurality of inner ribs may extend in the direction slightly inclined from the height direction of the bag-shaped separator, or may be slightly inclined from the width direction. However, even in such a case, the effects described above can be obtained.

The interval between the striped or grid-shaped inner ribs is preferably 0.5 mm or more and 10 mm or less in the plate region from the viewpoint of the thrust strength, oxidation resistance, and resistance to permeation short circuit. For example, the inner ribs are preferably formed at such an interval in 70% or more of the area of the electrode plate.

In contrast, the interval of the inner ribs in the joint region is preferably made smaller than the interval of the inner ribs in the plate region, because the inner ribs can be reliably intersected and the number of intersections can be increased. Specifically, the interval between the striped or grid-shaped inner ribs in the joint region is smaller than the interval between the inner ribs in the plate region and is preferably 0.5 mm or more and 2.0 mm or less.

The interval between the inner ribs is a distance between the tops of the adjacent first ribs or the second ribs (more specifically, the distance between the centers of the adjacent inner ribs in a direction crossing the inner ribs).

The outer ribs preferably have an average height of 0.3 mm or more when facing the positive electrode plate in the plate region in order to prevent the oxidation degradation, and preferably has an average height of 0.05 mm or more when facing the negative electrode plate in order to prevent the permeation short circuit. Meanwhile, the outer ribs in the plate region preferably has an average height of 0.5 mm or less from the viewpoint of maintaining high charge-discharge characteristics. The average height of the outer ribs in the joint region is preferably 0.05 mm or more from the point of the thrust strength at the end, and is preferably 0.5 mm or less from the viewpoint of preventing joining failure due to insufficient joining energy or the like.

Note that the average height of the outer ribs is obtained in accordance with the case of the inner rib. The height of the outer rib refers to a distance from the outer surface (the third surface or the fourth surface) of the base at a predetermined position of the outer rib to the top of the outer rib, in accordance with the case of the inner rib.

The pattern and orientation of the outer ribs are not particularly limited similarly to the case of the inner ribs. For example, the inner rib can be selected from those described above. The interval between the striped or grid-shaped outer ribs is preferably 0.5 mm or more and 10 mm or less in the plate region from the viewpoints of the thrust strength, oxidation resistance, and resistance to permeation short circuit. For example, the outer ribs having such a pitch are preferably formed in 70% or more of the area of the plate region.

In contrast, it is preferable that the interval between the outer ribs in the joint region be smaller than the interval between the outer ribs in the plate region and be 0.5 mm or more and 2.0 mm or less, from the viewpoint of increasing the compression ratio when the joining is performed by the crimping method or the like, and increasing the joining strength.

The interval between the outer ribs is a distance between the tops of the adjacent third ribs or the fourth ribs (more specifically, the distance between the centers of the adjacent outer ribs in a direction crossing the outer ribs).

Unless otherwise specified, the ranges of the interval and the height of the inner rib and the ranges of the interval and the height of the outer rib described above are suitable ranges particularly when the separator stores the negative electrode plate. When the separator stores the positive electrode plate, the ranges of the interval and the height of the outer ribs in the plate region described above can be selected as the ranges of the interval and the height of the inner ribs in the plate region, and the ranges of the interval and the height of the inner ribs in the plate region described above can be selected as the ranges of the interval and the height of the outer ribs in the plate region.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by transferring with a roller or the like that has a groove corresponding to the rib after the molding into a sheet shape or the removal of the pore-forming additive. When a filler is used, the filler is preferably added to the resin composition.

Hereinafter, the lead-acid battery according to the embodiment of the present invention will be described in detail for each of the main components, but the present invention is not limited to the following embodiment. Further, since the separator of the present embodiment described above is used as the separator of the lead-acid battery, components other than the separator will be described.

(Electrolyte solution)

The electrolyte solution contains sulfuric acid in the aqueous solution. The electrolyte solution may be gelled if necessary. The electrolyte solution may contain an additive used for a lead-acid battery, if necessary.

The specific gravity at 20°C of the electrolyte solution in a fully charged lead-acid battery after chemical conversion is, for example, 1.10 g/cm$^3$ or more and 1.35 g/cm$^3$ or less.

(Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives such as antimony (Sb).

A non-chemically converted paste-type positive electrode plate is obtained in such a manner that a positive electrode current collector is filled with a positive electrode paste, which is then cured and dried, according to the case of the negative electrode plate. The positive electrode paste is prepared by kneading lead powder, an additive, water, and sulfuric acid.

A non-chemically converted clad-type positive electrode plate is formed by mixing an additive and lead powder or slurry-like lead powder in a spine inserted tube as necessary, filling the mixture, and joining a plurality of tubes with a joint.

Thereafter, the positive electrode plate is formed by chemically converting a non-chemically converted positive electrode plate.

(Negative electrode plate)

The negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process.

The lead alloy used for the negative electrode current collector may be any of a Pb-Sb-based alloy, a Pb-Ca-based alloy, and a Pb-Ca-Sn-based alloy. The lead or lead alloys may further contain, as an additive electrode group, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these.

Chemical conversion can be performed by storing non-chemically converted positive and negative electrode groups into the container of the lead-acid battery. After the connection between the cells or the welding of the lid, the container may be filled with the electrolyte solution, and the chemical conversion may be performed in the container. Alternatively, the lead-acid battery or the electrode group may be assembled after the positive and negative electrode plates are chemically converted individually.

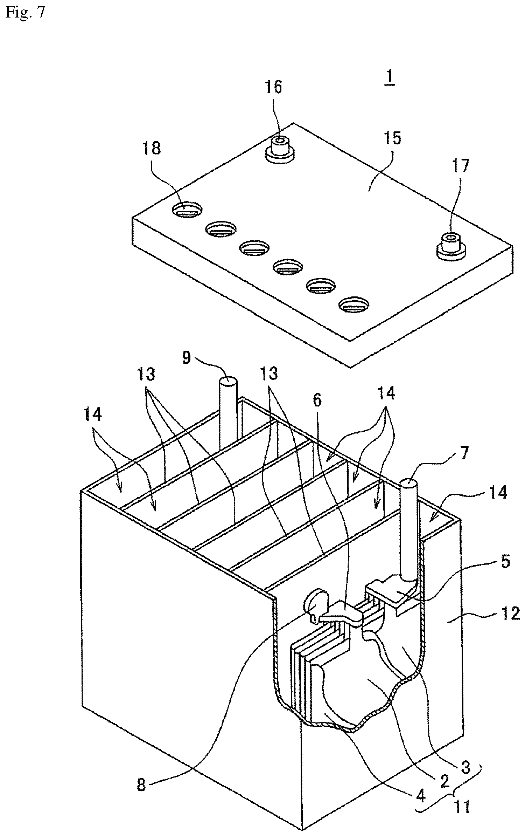

Fig. 7 shows an external view of an example of the lead-acid battery according to the embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by laminating a plurality of negative electrode plates 2 and positive electrode plates 3 with a separator 4 interposed therebetween. Here, the bag-shaped separator 4 storing the negative electrode plate 2 is shown, but the bag-shaped separator 4 may store the positive electrode plate 3. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

[Example]

Hereinafter, the present invention will be specifically described based on examples and comparative examples, but the present invention is not limited to the following examples.

< < Lead-acid battery A1 > >

(1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were both 0.2% by mass. The carbon black and the organic expander were then mixed into the negative electrode paste.

(2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

(3) Production of separator

One separator sheet formed from a polyethylene microporous film and having ribs formed on both surfaces was folded in two, and the left and right ends were joined to form a bag-shaped separator A. A separator sheet as follows was used: on the separator sheet shown in Fig. 2, the interval between the inner ribs was set to 2.0 mm in the plate region and 1.0 mm in the joint region (a peripheral region of 5 mm from each of the left and right ends), and the height of the inner rib was set to 0.1 mm in both the plate region and the joint region. The interval between the outer ribs was set to 8.0 mm in the plate region and 1.0 mm in the joint region, and the height of the outer rib was set to 0.4 mm in the plate region and 0.2 mm in the joint region. The average thickness of the base of the separator was 0.25 mm.

Protrusions of all the ribs including the inner ribs and the outer ribs each had a substantially trapezoidal shape in cross section, and the width of the rib was set to 0.25 mm at the bottom of the separator base surface and set to 0.15 mm at the top. The ribs were arranged on the separator sheet such that the inner ribs were formed on both surfaces (first surface and second surface) of the inner surface of the bag-shaped separator, and the outer ribs were formed on both surfaces (third surface and fourth surface) of the outer surface. The separator sheet had a rectangular shape with a long side length of 250 mm and a short side length of 152 mm, and all ribs were formed parallel to the long side of the separator sheet to have a linearly extending striped pattern.

At the time of folding the separator sheet in two, a direction in which the separator sheet was folded was slightly shifted from the direction parallel to the short side, and the sheet was folded so that the inner ribs facing each other did not superimpose (Fig. 3(a)). Thereafter, the 3 mm regions at the left and right ends were joined by the gear sealing method to obtain a bag-shaped separator. The length L of the inner rib excluding a folding margin was 124 mm in both the joint region and the plate region, and the interval D between the tops of the inner ribs in the joint region was 1.0 mm as described above. The distance W of the top of the inner rib located closest to the end side from the end was 0.4 mm. The shift angle θ of the axis Y, along which the separator sheet was folded, from the direction X parallel to the short side was 0.2° (intersection angle 2θ between inner ribs = 0.4°).

The separator sheet was folded while the non-chemically converted negative electrode plate was pressed onto the first region of the separator sheet, the left and right ends were joined, and the bag-shaped processing of the separator and the storage of the negative electrode plate were performed in parallel.

(4) Production of lead-acid battery

The bag-shaped separator A storing the negative electrode plate and the positive electrode plate were stacked, and an electrode group was formed by eight non-chemically converted negative electrode plates and eight non-chemically converted positive electrode plates per cell.

The electrode group was inserted into a container made of polypropylene, the container was filled with an electrolyte solution, and chemical conversion was performed in the container, to assemble a flooded-type lead-acid battery A1 having a nominal voltage of 12 V and a nominal capacity of 48 Ah (five-hour rate).

< <Lead-acid battery A2> >

In production of a separator S 1, the axis along which the separator sheet is folded in two was changed at the time of folding the separator sheet in two. The shift angle θ of the axis Y, along which the separator sheet was folded, from the direction X parallel to the short side was set to 0.5° (intersection angle 2θ between inner ribs = 1°) so that the inner ribs facing each other intersected (Fig. 3(b)). Except for this, a lead-acid battery A2 was produced similarly to the lead-acid battery A1.

< <Lead-acid battery A3 > >

A bag-shaped separator different from the separator S1 was prepared.

One separator sheet formed from a polyethylene microporous film and having ribs formed on both surfaces was folded in two, and the left and right ends were joined to form a bag-shaped separator S2. A separator sheet as follows was used: on the separator sheet shown in Fig. 6, the interval between the inner ribs was set to 0.5 mm in both the plate region and in the joint region (a peripheral region of 5 mm from each of the left and right ends), and the height of the inner rib was set to 0.1 mm in both the plate region and the joint region. The interval between the outer ribs was set to 8.0 mm in the plate region and 0.5 mm in the joint region, and the height of the outer rib was set to 0.4 mm in the plate region and 0.2 mm in the joint region. The average thickness of the base of the separator was 0.25 mm.

Protrusions of all the ribs including the inner ribs and the outer ribs each had a substantially trapezoidal shape in cross section, and the width of the rib was set to 0.2 mm at the bottom of the separator base surface and set to 0.1 mm at the top. The ribs were arranged on the separator sheet such that the inner ribs were formed on both surfaces (first surface and second surface) of the inner surface of the bag-shaped separator, and the outer ribs were formed on both surfaces (third surface and fourth surface) of the outer surface. The separator sheet had a rectangular shape with a long side length of 250 mm and a short side length of 152 mm, and all inner ribs were formed perpendicular to the long side of the separator sheet and all the outer ribs were formed parallel to the long side of the separator sheet, to have a linearly extending striped pattern.

At the time of folding the separator sheet in two, a direction in which the separator sheet was folded was slightly shifted from the direction parallel to the short side, and the sheet was folded so that the inner ribs facing each other did not superimpose. Thereafter, the 3 mm regions at the left and right ends were joined by the gear sealing method to obtain a bag-shaped separator. The length L of the inner rib excluding the folding margin was 152 mm, which was equal to the length of the short side of the separator sheet, in both the first region and the second region, both the joint region and the plate region, and the interval D between the tops of the inner ribs in the joint region was 0.5 mm as described above. The distance W of the top of the inner rib located closest to the end side from the end was 0 mm. The shift angle θ of the axis Y, along which the separator sheet was folded, from the direction X parallel to the short side was 0.05° (angle 2θ between inner ribs = 0.1°). The length L of the outer rib excluding a folding margin was 124 mm in both the joint region and the main region, and the interval between the tops of the outer ribs in the joint region was 0.5 mm as described above. The distance of the top of the outer rib located closest to the end side from the end was 0.4 mm.

A negative electrode plate was stored into the separator S2 to form an electrode group, and a lead-acid battery A3 was produced.

< <Lead-acid battery A4>>

In production of the separator S2, the axis along which the separator sheet is folded in two was changed at the time of folding the separator sheet in two. The shift angle θ of the axis Y, along which the separator sheet was folded, from the direction X parallel to the short side was set to 0.5° (intersection angle 2θ between inner ribs = 1°) so that the inner ribs facing each other intersected. Except for this, a lead-acid battery A2 was produced similarly to the lead-acid battery A3.

<<Lead-acid battery B1>>

A lead-acid battery B1 was produced similarly to the lead-acid battery A1, except that the positive electrode plate was stored into the separator S 1 to form the electrode group.

<<Lead-acid battery B2>>

A lead-acid battery B2 was produced similarly to the lead-acid battery A2, except that the positive electrode plate was stored into the separator S1 to form the electrode group.

In the lead-acid batteries B1 and B2, the interval between the inner ribs of the separator sheet was set to 8.0 mm in the plate region and 1.0 mm in the joint region (a peripheral region of 5 mm from the each of the left and right ends), and the height of the inner rib was set to 0.4 mm in the plate region and 0.2 mm in the joint region. Further, the interval between the outer ribs was set to 2.0 mm in the plate region and 1.0 mm in the joint region, and the height of the outer rib was set to 0.1 mm in both the plate region and the joint region.

<<Lead-acid battery B3>>

In preparation of the separator S2, the direction in which the separator sheet was folded was reversed to prepare the separator S3. That is, in the separator S3, the relationship between the inner ribs and the outer ribs is opposite to that of the separator S2, the inner ribs linearly extend parallel to the long side of the separator sheet, and the outer ribs linearly extend perpendicular to the long side of the separator sheet. The interval, height, and length of the inner ribs in the separator S3 are the same as the interval, height, and length of the outer ribs in the separator S2, respectively, and the interval, height, and length of the outer ribs in the separator S3 are the same as the interval, height, and length of the inner rib in the separator S2, respectively.

A lead-acid battery B3 was produced similarly to the lead-acid battery A3, except that the positive electrode plate was stored into the separator S3 to form the electrode group.

<<Lead-acid battery B4>>

A lead-acid battery B4 was produced similarly to the lead-acid battery A4, except that the positive electrode plate was stored into the bag-shaped separator S3 to form the electrode group.

[Evaluation 1: Bottom short circuit caused by vibration]

A heavy loading life test specified in Japanese Industrial Standards (JIS) D 5301: 2006 was performed 150 cycles, and thereafter, the following vibration test was performed to compare an occurrence ratio of a bottom short circuit.

Vibration direction: simple vertical vibration
Acceleration: 6 G
Vibration frequency: 30 Hz
Excitation time: 2 hours

[Evaluation 2: Resistance to permeation short circuit]

Charge and discharge were repeated in the following cycle to evaluate the number of cycles by which the permeation short circuit occurred.

1. Discharge: 9.6 A (final voltage: 10.5 V)
2. Constant resistance discharge: 10 Ω resistance connection x 7 days
3. Charge: 14.4 V/50 A x 60 minutes

1 to 3 above were repeated as one cycle, and the number of cycles was obtained at the time when the charge current and voltage fluctuated due to the occurrence of the permeation short circuit. The resistance to permeation short circuit of each lead-acid battery was evaluated by a relative ratio with the number of cycles of the lead-acid battery A1 being 100.

Table 1 shows the results of the evaluations 1 and 2 of the lead-acid batteries A1 to A4 and B1 to B4.

[Table 1]

| Battery | Stored in separator | Intersection of ribs | Occurrence ratio of bottom short circuit in vibration test [%] | Cycle number at occurrence of permeation short circuit [%] |
|---|---|---|---|---|
| A1 | Negative electrode plate | No | 20 | 100 |
| A2 | Negative electrode plate | Yes | 0 | 120 |
| A3 | Negative electrode plate | No | 20 | 100 |
| A4 | Negative electrode plate | Yes | 0 | 120 |
| B1 | Positive electrode plate | No | 20 | 120 |
| B2 | Positive electrode plate | Yes | 0 | 120 |
| B3 | Positive electrode plate | No | 20 | 120 |

(continued)

| Battery | Stored in separator | Intersection of ribs | Occurrence ratio of bottom short circuit in vibration test [%] | Cycle number at occurrence of permeation short circuit [%] |
|---|---|---|---|---|
| B4 | Positive electrode plate | Yes | 0 | 120 |

As shown in Table 1, in the lead-acid batteries A2 and A4 in which the inner ribs were arranged so as to intersect in the joint region, no bottom short circuit occurred in the vibration test. It is conceivable that this is because, since the joining strength of the bag-shaped separator has been improved, the seal at the end of the separator does not come off, thus preventing a short circuit due to the contact between the negative electrode plate and a precipitate derived from the positive active material deposited at the bottom of the container by the heavy loading life test. In contrast, in the lead-acid batteries A1 and A3, the bottom short circuit occurred with a high probability of 20%. It is conceivable that this is because, with the joining strength of the bag-shaped separator being not sufficient, the joining of the bag-shaped separator partially came off during the vibration test, and the precipitate derived from the positive active material came into contact with the negative electrode plate through the portion where the joining had come off, leading to the occurrence of the short circuit.

Furthermore, in the lead-acid batteries A2 and A4, the resistance to permeation short circuit has also been improved as compared to the lead-acid battery A1. It is conceivable that this is because the crimped part after the gear sealing becomes slightly thicker due to the intersection of the inner ribs, so that the distance between the negative electrode plate and the separator becomes slightly wider in the joint region at the separator end or in the region between the joint region and the plate region, thereby preventing the contact between the negative electrode plate and the separator around the end and preventing the permeation short circuit.

As described above, the lead-acid battery of the present embodiment has a remarkable effect when the bag-shaped separator stores the negative electrode plate, and can partially solve a unique problem that occurs in the lead-acid battery configured to store the negative electrode plate in the bag-shaped separator.

When the positive electrode plate was stored into the bag-shaped separator to manufacture a lead-acid battery by the same method, and a vibration test was similarly performed to evaluate the resistance to permeation short circuit, the results shown in the lead-acid batteries B1 to B4 in Table 1 were obtained. As in the case where the negative electrode plate is stored into the bag-shaped separator, the bottom short circuit is prevented by arranging the inner ribs so as to intersect at the joint part. On the other hand, when the positive electrode plate is stored into the bag-shaped separator, the distance between the negative electrode plate and the separator at the end of the separator is sufficiently ensured by not storing the negative electrode plate. Therefore, the lead-acid batteries B2 and B4 in which the inner ribs intersect at the joint part and the lead-acid batteries B1 and B3 where the inner ribs do not intersect at the joint part both obtained resistance to permeation short circuit which was equivalent to those of the lead-acid batteries A2 and A4.

INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container

13: partition
14: cell chamber
15: lid
16: negative electrode terminal
17: positive electrode terminal
18: vent plug
100: separator
101: base
102a to 102e: inner rib
104a, 104b: outer rib
106: plate region
108a, 108b: joint region
109a, 109b: joint part
110 to 112, 114: separator sheet

## Claims

1. A lead-acid battery in which an electrode group is stored in a cell chamber together with an electrolyte solution, the electrode group having a plurality of positive electrode plates and a plurality of negative electrode plates stacked via a separator,
   wherein

   the separator has a shape of a bag with an opening,
   the separator includes

   a first surface and a second surface constituting an inner surface of the bag and facing each other,
   a plurality of first ribs provided on the first surface, and a plurality of second ribs provided on the second surface,
   a third surface that is a back surface of the first surface and a fourth surface that is a back surface of the second surface, the third surface and the fourth surface constituting an outer surface of the bag,
   a plurality of third ribs provided on the third surface, and a fourth rib provided on the fourth surface, and
   a joint part between the first surface and the second surface, and

   at least one of the first ribs provided on the first surface intersects at the joint part with at least one of the second ribs provided on the second surface.

2. The lead-acid battery according to claim 1, wherein the separator stores the negative electrode plate.

3. The lead-acid battery according to claim 1 or 2, wherein

   the first rib linearly extends in a first direction in a peripheral region of the joint part on the first surface, and
   the second rib linearly extends in a second direction different from the first direction in a peripheral region of the joint part on the second surface.

4. The lead-acid battery according to any one of claims 1 to 3, wherein

   the separator has a joint region including the joint part and a plate region separated from the joint region on the first surface and the second surface, respectively, and
   the first ribs include

   a plurality of first joint ribs provided at a regular interval in the joint region on the first surface, and
   a plurality of first plate ribs are provided at a regular interval in the plate region on the first surface, and

   the interval at which the first joint ribs are provided is smaller than the interval at which the first plate ribs are provided.

5. The lead-acid battery according to claim 4, wherein

the second ribs include

a plurality of second joint ribs provided at a regular interval in the joint region on the second surface, and
a plurality of second plate ribs provided at a regular interval in the plate region on the second surface, and

the interval at which the second joint ribs are provided is smaller than the interval at which the second plate ribs are provided.

6.  The lead-acid battery according to claim 4 or 5, wherein the third rib is formed in a region on the third surface corresponding to the joint region on the first surface.

7.  The lead-acid battery according to any one of claims 1 to 6, wherein a joint is formed at the joint part by crimping-joining or welding-joining.


**Patentansprüche**

1.  Bleiakkumulator, in dem eine Elektrodengruppe zusammen mit einer Elektrolytlösung in einer Zellkammer aufgenommen ist, wobei die Elektrodengruppe mehrere positive Elektrodenplatten und mehrere negative Elektrodenplatten aufweist, die über einen Separator gestapelt sind,
    wobei

    der Abscheider eine Form eines Beutels mit einer Öffnung hat,
    der Separator umfasst:

    eine erste Fläche und eine zweite Fläche, die eine Innenfläche des Beutels bilden und einander zugewandt sind,
    mehrere erste Rippen, die auf der ersten Fläche vorgesehen sind, und mehrere zweite Rippen, die auf der zweiten Fläche vorgesehen sind,
    eine dritte Fläche, die eine Rückfläche der ersten Fläche ist, und eine vierte Fläche, die eine Rückfläche der zweiten Fläche ist, wobei die dritte Fläche und die vierte Fläche eine Außenfläche des Beutels bilden,
    mehrere dritte Rippen, die auf der dritten Fläche vorgesehen sind, und eine vierte Rippe, die auf der vierten Fläche vorgesehen ist, und
    einen Verbindungsteil zwischen der ersten Fläche und der zweiten Fläche, und
    wenigstens eine der ersten Rippen, die auf der ersten Fläche vorgesehen sind, sich an dem Verbindungsteil mit wenigstens einer der zweiten Rippen, die auf der zweiten Fläche vorgesehen sind, schneidet.

2.  Bleiakkumulator nach Anspruch 1, wobei der Separator die negative Elektrodenplatte aufnimmt.

3.  Bleiakkumulator nach Anspruch 1 oder 2, wobei

    die erste Rippe sich linear in einer ersten Richtung in einem Umfangsbereich des Verbindungsteils auf der ersten Fläche erstreckt und
    die zweite Rippe sich linear in einer zweiten Richtung,
    die von der ersten verschieden ist, in einem Umfangsbereich des Verbindungsteils auf der zweiten Fläche erstreckt.

4.  Bleiakkumulator nach einem der Ansprüche 1 bis 3, wobei

    der Separator einen Verbindungsbereich, der den Verbindungsteil umfasst, und einen Plattenbereich, der von dem Verbindungsbereich auf der ersten Fläche bzw. der zweiten Fläche getrennt ist, aufweist, und
    die ersten Rippen umfassen:

    mehrere erste Verbindungsrippen, die in einem regelmäßigen Abstand in dem Verbindungsbereich auf der ersten Fläche vorgesehen sind, und
    mehrere erste Plattenrippen, die in einem regelmäßigen Abstand in dem Plattenbereich auf der zweiten Fläche vorgesehen sind, und
    der Abstand, in dem die ersten Verbindungsrippen vorgesehen sind, kleiner ist als der Abstand, in dem die ersten Plattenrippen vorgesehen sind.

5. Bleiakkumulator nach Anspruch 4, wobei
die zweiten Rippen umfassen:

mehrere zweite Verbindungsrippen, die in einem regelmäßigen Abstand in dem Verbindungsbereich auf der zweiten Fläche vorgesehen sind, und
mehrere zweite Plattenrippen, die in einem regelmäßigen Abstand in dem Plattenbereich auf der zweiten Fläche vorgesehen, und
der Abstand, in dem die zweiten Verbindungsrippen vorgesehen sind, kleiner ist als der Abstand, in dem die zweiten Plattenrippen vorgesehen sind.

6. Bleiakkumulator nach Anspruch 4 oder 5, wobei die dritte Rippe in einem Bereich auf der dritten Fläche gebildet ist, der dem Verbindungsbereich auf der ersten Fläche entspricht.

7. Bleiakkumulator nach einem der Ansprüche 1 bis 6, wobei eine Verbindung an dem Verbindungsteil durch Crimpverbindung oder Schweißverbindung gebildet ist.

## Revendications

1. Batterie au plomb, dans laquelle un groupe d'électrodes est logé dans une chambre de cellules conjointement avec une solution électrolytique, le groupe d'électrodes comportant une pluralité de plaques d'électrode positive et une pluralité de plaques d'électrode négative empilées via un séparateur,
dans laquelle

le séparateur a une forme de poche avec une ouverture,
le séparateur comprend :

une première surface et une deuxième surface constituant une surface intérieure de la poche et l'une en face de l'autre,
une pluralité de premières nervures agencées sur la première surface, et une pluralité de deuxièmes nervures agencées sur la deuxième surface,
une troisième surface qui est une surface arrière de la première surface et une quatrième surface qui est une surface arrière de la deuxième surface, la troisième surface et la quatrième surface constituant une surface extérieure de la poche,
une pluralité de troisièmes nervures agencées sur la troisième surface, et une quatrième nervure agencée sur la quatrième surface, et
une partie de joint entre la première surface et la deuxième surface, et
au moins une des premières nervures agencées sur la première surface coupe, au niveau de la partie de joint, au moins une des deuxièmes nervures agencées sur la deuxième surface.

2. Batterie au plomb selon la revendication 1, dans laquelle le séparateur loge la plaque d'électrode négative.

3. Batterie au plomb selon la revendication 1 ou 2, dans laquelle

la première nervure s'étend linéairement dans une première direction dans une zone périphérique de la partie de joint sur la première surface, et
la deuxième nervure s'étend linéairement dans une seconde direction différente de la première direction dans une zone périphérique de la partie de joint sur la deuxième surface.

4. Batterie au plomb selon l'une quelconque des revendications 1 à 3, dans laquelle

le séparateur comporte une zone de joint comprenant la partie de joint et une zone de plaque séparée de la zone de joint sur la première surface et la deuxième surface, respectivement, et
les premières nervures comprennent :

une pluralité de premières nervures de joint agencées à un intervalle régulier dans la zone de joint sur la première surface, et
une pluralité de premières nervures de plaque sont agencées à un intervalle régulier dans la zone de plaque sur la première surface, et
l'intervalle auquel les premières nervures de joint sont agencées est plus petit que l'intervalle auquel les premières nervures de plaque sont agencées.

5. Batterie au plomb selon la revendication 4, dans laquelle les deuxièmes nervures comprennent :

une pluralité de deuxièmes nervures de joint agencées à un intervalle régulier dans la zone de joint sur la deuxième surface, et
une pluralité de deuxièmes nervures de plaque agencées à un intervalle régulier dans la zone de plaque sur la deuxième surface, et
l'intervalle auquel les deuxièmes nervures de joint sont agencées est plus petit que l'intervalle auquel les deuxièmes nervures de plaque sont agencées.

6. Batterie au plomb selon la revendication 4 ou 5, dans lequel la troisième nervure est formée dans une zone sur la troisième surface correspondant à la zone de joint sur la première surface.

7. Batterie au plomb selon l'une quelconque des revendications 1 à 6, dans laquelle un joint est formé au niveau de la partie de joint par un assemblage par sertissage ou un assemblage par soudage.

Fig. 1

Fig. 2

Fig. 3

(a)                              (b)

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015022796 A
- JP 2009245901 A

- JP 3109387 U
- JP 5043462 A